(19) Europäisches Patentamt / European Patent Office / Office européen des brevets

(11) **EP 3 027 460 B1**

(12) **FASCICULE DE BREVET EUROPEEN**

(45) Date de publication et mention
de la délivrance du brevet:
**17.02.2021 Bulletin 2021/07**

(21) Numéro de dépôt: **14755861.3**

(22) Date de dépôt: **11.07.2014**

(51) Int Cl.:
***B60L 7/26*** *(2006.01)*        ***B60L 7/18*** *(2006.01)*
***B60L 3/12*** *(2006.01)*        ***B60L 15/20*** *(2006.01)*
***B60L 7/22*** *(2006.01)*        ***B60W 10/18*** *(2012.01)*

(86) Numéro de dépôt international:
**PCT/FR2014/051785**

(87) Numéro de publication internationale:
**WO 2015/015081 (05.02.2015 Gazette 2015/05)**

(54) **CONTROLE DU FREINAGE POUR UN VEHICULE EQUIPE D'UN MOYEN DE FREINAGE REGENERATIF**

BREMSSTEUERUNG FÜR FAHRZEUG UMFASSEND REGENERATIVE BREMSE

BRAKE CONTROL FOR A VEHICLE WITH REGENERATIVE BRAKING MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2013 FR 1357497**

(43) Date de publication de la demande:
**08.06.2016 Bulletin 2016/23**

(73) Titulaire: **Renault S.A.S.**
**92100 Boulogne-Billancourt (FR)**

(72) Inventeurs:
• **AMARA, Sofiane**
**F-75013 Paris (FR)**
• **PITA-GIL, Guillermo**
**F-75014 Paris (FR)**
• **AZZI, Hamid**
**F-78310 Maurepas (FR)**

(56) Documents cités:
EP-A2- 2 055 588          EP-A2- 2 460 701
DE-A1-102011 086 367      FR-A1- 2 983 437

**EP 3 027 460 B1**

**Description**

La présente invention concerne le contrôle du freinage pour un véhicule équipé d'un moyen de freinage régénératif, par exemple un moyen de freinage électrique, et d'un moyen de freinage complémentaire, par exemple un moyen de freinage hydraulique.

Le véhicule peut par exemple être un véhicule électrique ou hybride.

Sur un véhicule équipé d'au moins un moteur de traction ou de propulsion électrique, il est possible, sous certaines conditions, d'utiliser le moteur électrique comme générateur et d'obtenir ainsi un moyen de freinage électrique. Une telle utilisation est avantageuse car régénérative, elle permet de récupérer une partie de l'énergie afin de recharger les batteries.

Néanmoins, dans le cas de véhicules ainsi équipés d'un actionneur électrique permettant un freinage régénératif, et d'un actionneur hydraulique, par exemple un frein à friction classique, il a été observé que pour une consigne de freinage donnée, c'est-à-dire une consigne utilisateur, par exemple un appui sur la pédale de freinage, le niveau de décélération est susceptible d'être différent selon la répartition entre freinage hydraulique et freinage électrique.

En effet, l'actionneur électrique peut avoir une précision de l'ordre de 5%, mais en revanche, l'efficacité de l'actionneur hydraulique peut varier dans le temps, et présenter des écarts de l'ordre de 30 ou 40%. L'efficacité de l'actionneur hydraulique est en effet fonction de plusieurs paramètres, dont la température et l'état d'usure des plaquettes de frein.

Lorsque le système de répartition entre freinage électrique et freinage hydraulique est agencé de façon à aménager des transitions entre ces différents freinages, cette différence de précision entre les actionneurs électriques et hydrauliques peut s'avérer relativement perturbante pour l'utilisateur. Par exemple, le système de répartition peut être agencé de façon à interdire le freinage électrique lorsque le véhicule a une vitesse en-dessous de 7 km/h. La coupure est graduelle, entre 14 et 7 km/h. Lorsque l'utilisateur applique une consigne de freinage donnée, c'est-à-dire maintient son pied appuyé et fixe sur la pédale de frein, alors que le véhicule a une vitesse de par exemple 20 km/h, le freinage est initialement électrique. La vitesse du véhicule diminue alors graduellement, puis à partir de 14 km/h, le freinage hydraulique vient relayer le freinage électrique. Or, si l'efficacité de l'actionneur hydraulique est de l'ordre de 70% de l'efficacité de l'actionneur électrique, lors de ce passage du tout électrique au tout hydraulique, l'utilisateur pourra avoir la sensation d'un trou de décélération, et ce, alors qu'il a maintenu un appui sur la pédale de freinage constant.

Le document US 2008/0129110 décrit un procédé de contrôle du freinage avec récupération d'énergie dans lequel on mesure l'accélération lorsque le véhicule a une vitesse relativement élevée et que cette accélération est supposée résulter uniquement de l'efficacité du moyen de freinage électrique. On mesure ensuite l'accélération pour une autre vitesse du véhicule, cette autre vitesse étant telle que l'accélération est supposée résulter uniquement de l'efficacité du moyen de freinage hydraulique, ces deux mesures d'accélération étant effectuées pour une même valeur de consigne de freinage appliquée par le conducteur. On calcule ensuite un ratio de ces efficacités de freinage et on applique ce ratio à la commande de freinage hydraulique. Le procédé est ensuite répété jusqu'à converger vers un gap réduit à 0.

La demande FR2983437, déposée au nom de la demanderesse, décrit un procédé moins contraignant et plus efficace. Pendant une transition de freinage, au cours de laquelle le moyen de freinage régénératif et/ou le système de freinage complémentaire applique un effort de freinage au véhicule, on mesure à deux instants proches des valeurs d'accélération du véhicule, des valeurs de couple appliqué par le moyen de freinage régénératif, et des valeurs de consigne de freinage complémentaire. Le coefficient d'efficacité du moyen de freinage complémentaire est estimé à partir de ces mesures en utilisant une méthode statistique du type moindres carrés avec un facteur d'oubli variable. Le coefficient d'efficacité ainsi estimé est ensuite utilisé pour corriger les valeurs de consigne de freinage complémentaire transmises vers le moyen de freinage complémentaire afin de suppléer aux pertes d'efficacité de l'actionneur correspondant. EP2460701 et DE102011086367 décrivent des procédés de contrôle de freinage selon l'art de la technique.

Il existe un besoin pour un procédé permettant un contrôle du freinage plus précis.

Il est proposé un procédé du contrôle du freinage pour un véhicule équipé d'un moyen de freinage régénératif, par exemple un moyen de freinage électrique, et d'un moyen de freinage complémentaire, par exemple un moyen de freinage hydraulique. Le procédé comprend :

- estimer une valeur de coefficient d'efficacité du moyen de freinage complémentaire au cours du roulage du véhicule;
- stocker une pluralité de valeurs de coefficient d'efficacité du moyen de freinage complémentaire, chaque valeur stockée correspondant à une vitesse du véhicule ou à une plage de vitesses de ce véhicule,
- recevoir une valeur de vitesse courante de véhicule,
- corriger une valeur de consigne de freinage complémentaire destinée au moyen de freinage complémentaire, en appliquant à cette valeur de consigne une valeur de coefficient d'efficacité choisie parmi cette pluralité de valeurs stockées et correspondant à la vitesse courante du véhicule.

La valeur de vitesse courante du véhicule peut être reçue d'un capteur de vitesse ou bien encore être estimée en fonction des commandes utilisateur, ou autre.

Ainsi, la correction effectuée est-elle fonction de la vitesse courante du véhicule. En effet, il s'est avéré que l'efficacité du moyen de freinage complémentaire peut varier selon la vitesse du véhicule. En particulier, pour des vitesses relativement faibles, notamment inférieures à 10 km/h, cette efficacité peut être plus élevée que pour des vitesses relativement élevées, par exemple de l'ordre de 50 km/h.

Le coefficient d'efficacité dont on stocke une pluralité de valeurs, peut être un coefficient correctif à appliquer à une valeur moyenne d'efficacité du moyen de freinage complémentaire, ou bien encore directement l'efficacité du moyen de freinage complémentaire, ou autre.

La pluralité de valeurs du coefficient d'efficacité peuvent par exemple être prédéterminées. On pourra par exemple prévoir de mesurer ces valeurs en atelier et de les stocker ensuite dans une cartographie, cette cartographie étant régulièrement lue afin de corriger en continu la consigne de freinage complémentaire.

Il pourra par exemple s'agir d'une cartographie 2D, ou bien encore d'une cartographie 3D structurée pour associer une valeur de coefficient d'efficacité à un couple (valeur de vitesse, valeur de couple de consigne ou effectif). L'invention n'exclut pas non plus l'utilisation de cartographies plus élaborées, prenant en compte d'autres paramètres, comme par exemple la température ou autre. Ces cartographies peuvent être établies en atelier constructeur.

Néanmoins, dans un mode de réalisation préféré, on pourra prévoir que ces valeurs soient estimées au cours du roulage du véhicule. Au moins une valeur de coefficient d'efficacité parmi la pluralité de valeurs de coefficient d'efficacité peut être issue d'une estimation effectuée à partir de valeurs mesurées pendant le roulage du véhicule. Ceci peut permettre de corriger la consigne de freinage complémentaire de façon plus précise et plus adaptée.

En particulier, on pourra prévoir que pour au moins une (et avantageusement chaque) valeur de vitesse ou plage de vitesses, la valeur de coefficient d'efficacité correspondante soit obtenue à partir :

- d'au moins une valeur de mesure d'accélération du véhicule, cette au moins une mesure étant effectuée pendant une transition de freinage au cours de laquelle le moyen de freinage régénératif et/ou le moyen de freinage complémentaire appliquent un effort de freinage au véhicule, et
- pour chaque valeur d'accélération reçue, d'une valeur de couple appliquée par le moyen de freinage régénératif, et d'une valeur de consigne de freinage complémentaire destinée au moyen de freinage complémentaire, correspondant à l'instant de mesure de cette valeur d'accélération. Cet instant est choisi alors que la vitesse courante du véhicule est égale à la valeur de vitesse ou se situe dans la plage de vitesses.

Ainsi, au moins une et avantageusement chaque valeur du coefficient d'efficacité de la pluralité de valeurs de coefficient d'efficacité peut être obtenue en appliquant le procédé décrit dans la demande FR2983437.

La valeur de consigne de freinage complémentaire peut être déterminée par un dispositif de répartition d'une commande de freinage globale entre le moyen de freinage régénératif et le moyen de freinage complémentaire. Ce dispositif de répartition reçoit en entrée une valeur de commande de freinage global, correspondant à un appui pédale donné, et détermine à partir de cette valeur de commande et d'autres paramètres, comme par exemple la vitesse du véhicule, un signal indicateur de stabilité, etc., une valeur de consigne de freinage régénératif et une valeur de consigne de freinage complémentaire. C'est ce dispositif de répartition qui peut en particulier commander une transition du tout électrique vers le tout hydraulique entre 14 et 7 km/h.

Avantageusement et de façon non limitative, on peut prévoir de recevoir, pour au moins une et avantageusement chaque valeur du coefficient d'efficacité, au moins une paire de deux valeurs de mesure d'accélération et de calculer au moins une valeur de variation de l'accélération à partir respectivement de cette au moins une paire de valeurs de mesure. Le coefficient d'efficacité peut être estimé à partir de cette au moins une variation d'accélération d'au moins une variation de couple appliqué par le moyen de freinage régénératif et d'au moins une variation de consigne de freinage complémentaire.

Avantageusement et de façon non limitative, pour au moins une paire de valeurs des mesures d'accélération, les deux instants de mesure correspondant à cette paire peuvent être relativement proches, c'est-à-dire suffisamment proches pour que la variation des paramètres dynamiques extérieurs du véhicules puissent être négligés.

La durée entre ces deux instants de mesure peut par exemple être inférieure à 5 secondes, avantageusement inférieure à 2 secondes, avantageusement inférieur à 0,5 secondes, avantageusement supérieure à 0,0001 seconde. Ceci peut ainsi permettre de choisir les instants de mesure sans tenir compte des éventuels paramètres dynamiques extérieurs susceptibles d'avoir une influence sur l'accélération du véhicule, comme la force et la direction du vent, l'état de la route, la pente de la route, etc.

Avantageusement et de façon non limitative, on peut prévoir de recevoir une pluralité de valeurs de mesure d'accélération, une pluralité de valeurs de consigne de freinage complémentaire correspondantes et une pluralité de valeurs de couple appliqué par le moyen de freinage régénératif correspondantes.

Avantageusement et de façon non limitative, on peut estimer une valeur statistique du coefficient de freinage.

Ceci peut permettre d'éviter les variations brutales de l'estimation liées à l'implémentation d'une étape de division par une valeur très faible.

Avantageusement et de façon non limitative, l'étape d'estimation peut en outre être fonction de paramètres physiques du véhicule, par exemple la masse du véhicule et le rayon des roues du véhicule.

Avantageusement et de façon non limitative, le procédé peut comprendre la réception d'une pluralité de paires de valeurs de mesure d'accélération, l'estimation étant effectuée en fonction de cette pluralité de paires de valeurs.

Avantageusement et de façon non limitative, l'étape d'estimation peut en outre être fonction d'au moins une valeur de coefficient d'efficacité du moyen de freinage complémentaire précédente(s). Ainsi, pour au moins une, et avantageusement chaque, valeur de vitesse ou plage de vitesses, la valeur de coefficient d'efficacité correspondante peut être estimée à partir en outre d'au moins une valeur de coefficient d'efficacité précédemment estimée et correspondant à ladite valeur de vitesse ou plage de vitesses.

Avantageusement et de façon non limitative, l'étape d'estimation peut être effectuée selon une méthode des moindres carrés.

Avantageusement et de façon non limitative, l'étape d'estimation peut être effectuée selon une méthode des moindres carrés récursifs.

Avantageusement et de façon non limitative, l'étape d'estimation peut être effectuée selon une méthode des moindres carrés récursifs, à facteur d'oubli. Ce facteur d'oubli peut être variable, ou non.

Avantageusement et de façon non limitative, le facteur d'oubli peut être compris entre 0,9 et 1, la valeur 1 étant exclue.

Dans un mode de réalisation avantageux, on peut prévoir un ensemble de plages de vitesses. Les plages de cet ensemble peuvent être disjointes, ou non. Pour chaque plage de vitesses, on peut estimer une valeur du coefficient d'efficacité du moyen de freinage complémentaire, à partir de valeurs d'accélération de couple appliqué par le moyen de freinage régénératif et de consignes de freinage complémentaire mesurées alors que le véhicule a une vitesse courante dans cette plage de vitesses.

Dans un mode de réalisation avantageux, on peut prévoir de déterminer un jeu de valeurs de coefficient d'efficacité du moyen de freinage complémentaire, ce jeu comprenant plusieurs valeurs, puis d'obtenir les autres valeurs de la pluralité de valeurs du coefficient d'efficacité par interpolation à partir des valeurs de ce jeu. Ainsi peut-on obtenir une valeur de coefficient d'efficacité pour chaque valeur de vitesse, et ce, relativement simplement et rapidement.

L'invention n'est bien entendu pas limitée à des variations continues des valeurs du coefficient d'efficacité. On pourra par exemple se contenter d'une valeur de coefficient d'efficacité par plage de vitesses.

L'ensemble des plages de vitesse peut former une partition de la plage atteignable, par exemple 0-200km/h.

Il est en outre proposé un produit programme d'ordinateur comprenant des instructions pour effectuer les étapes du procédé décrit ci-dessus lorsque ce programme est exécuté par un processeur. Ce programme peut par exemple être stocké dans une mémoire, par exemple un disque dur, une clé USB (de l'anglais « Universal Serial Bus »), ou autre, téléchargé via un réseau de télécommunication, par exemple Internet ou autre, ou autre.

Il est en outre proposé un dispositif de contrôle du freinage pour un véhicule équipé d'un moyen de freinage régénératif, et d'un moyen de freinage complémentaire. Le dispositif comprend :

- une mémoire pour stocker une pluralité de valeurs d'un coefficient d'efficacité, chaque valeur stockée correspondant à une vitesse ou à une plage de vitesses du véhicule,
- des moyens de réception pour recevoir une valeur de vitesse courante du véhicule,
- des moyens de traitement pour corriger une valeur de consigne de freinage complémentaire destinée au moyen de freinage complémentaire, en appliquant une valeur du coefficient d'efficacité choisie parmi cette pluralité de valeurs stockées dans la mémoire et correspondant à la valeur de vitesse courante du véhicule.

Ce dispositif peut ainsi être agencé de façon à pouvoir mettre en œuvre le procédé décrit ci-dessus.

La mémoire dans laquelle sont stockées les valeurs du coefficient d'efficacité peut être une mémoire morte, ou bien avantageusement une mémoire vive. Cette mémoire peut avantageusement être régulièrement réécrite, au fur et à mesure que ces valeurs du coefficient d'efficacité sont estimées.

Le dispositif décrit ci-dessus peut par exemple comprendre ou être intégré dans un processeur, par exemple un microcontrôleur, un microprocesseur ou bien encore un DSP (de l'anglais « Digital Signal Processor »).

Les moyens de réception peuvent par exemple comprendre un port d'entrée, un premier processeur ou autre, et les moyens de traitement peuvent par exemple comprendre un cœur de processeur, un deuxième processeur ou autre.

Il est en outre proposé un système de commande de freinage comprenant un dispositif de répartition d'une commande de freinage globale entre le moyen de freinage régénératif le moyen de freinage complémentaire, ainsi qu'un dispositif de contrôle tel que décrit ci-dessus.

Il est en outre proposé un véhicule comprenant un moyen de freinage régénératif, un moyen de freinage complémentaire et un dispositif et/ou un système tel que décrit ci-dessus.

L'invention sera mieux comprise à la lecture de la description, laquelle est donnée à titre illustratif.

La figure 1 montre schématiquement un exemple de dispositif selon un mode de réalisation de l'invention.

La figure 2 est un logigramme illustrant un procédé selon un mode de réalisation de l'invention.

La figure 3 est un graphique représentant le coefficient d'efficacité en fonction de la vitesse en km/h.

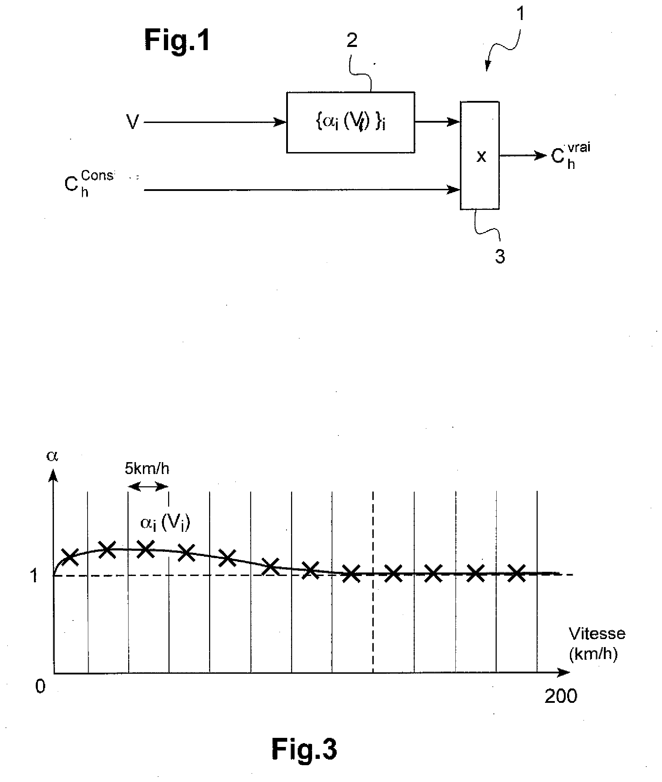

En référence à la figure 1, un véhicule non représenté dans sa totalité est équipé d'un système de freinage à friction et d'un système de freinage par récupération d'énergie électrique.

Un dispositif de répartition permet d'élaborer, à partir d'une consigne de freinage globale issue de la pédale de frein, une valeur de consigne de freinage régénératif $C_e^{cons}$, destinée au système de freinage par récupération d'énergie électrique, et une consigne de freinage complémentaire $C_h^{cons}$, destiné au système de freinage à friction.

Un dispositif de contrôle 1 permet de compenser au moins en partie l'imprécision de l'actionneur hydraulique. Ce système comprend une mémoire 2 dans laquelle sont stockées une pluralité de valeurs de coefficient d'efficacité $\alpha_i$ de l'actionneur hydraulique, chaque valeur de cette pluralité correspondant à une plage de vitesses Vi du véhicule électrique. Dans cet exemple, le coefficient d'efficacité est un facteur correctif destiné à être appliqué à une valeur d'efficacité supposée de l'actionneur électrique. Le coefficient d'efficacité est donc susceptible d'avoir des valeurs supérieures à 1.

Le dispositif 1 reçoit en entrée une valeur de vitesse courante du véhicule V, issue d'un capteur de vitesse, et la valeur de consigne de freinage hydraulique $C_h^{cons}$ issue du dispositif de répartition. Une valeur de coefficient d'efficacité est choisie parmi la pluralité de valeurs stockées dans la mémoire 2, selon la valeur de vitesse V reçue. Dit autrement, on choisit la valeur de ce coefficient qui correspond à la valeur de vitesse reçue.

Cette valeur de coefficient est envoyée à un multiplicateur 3, ce multiplicateur étant agencé pour multiplier la valeur de consigne de freinage hydraulique par la valeur d'efficacité supposée et par la valeur du coefficient choisie.

La valeur de consigne ainsi obtenue en sortie du multiplicateur 3 $C_h^{vrai}$ est ensuite transmise vers l'actionneur hydraulique.

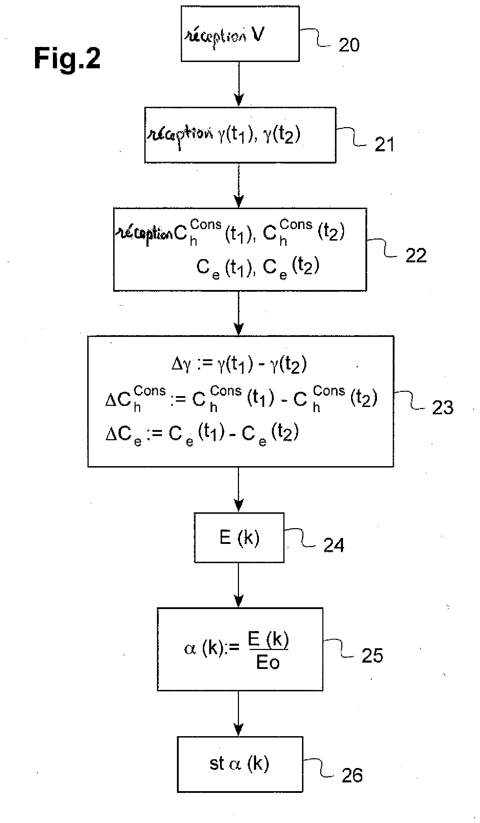

La figure 2 illustre un exemple de procédé d'estimation des valeurs de coefficient d'efficacité, selon un mode de réalisation de l'invention.

Au cours d'une étape 20, on reçoit une valeur de vitesse du véhicule.

Puis, au cours d'une étape non représentée, on détermine la plage de vitesses, parmi un ensemble de plages formant une partition de la plage de vitesses atteignable, par exemple 0-200 km/h. Chaque plage de vitesses peut avoir une étendue de 5 km/h par exemple.

Ainsi, on détermine à quelle plage de vitesses correspond la vitesse V. Puis on reçoit deux valeurs d'accélération $\gamma(t_1)$, $\gamma(t_2)$ mesurées à des instants très proches et très proches également de l'instant de mesure de la vitesse V, au cours d'une étape 21.

Au cours d'une étape 22, on reçoit des valeurs de consigne électriques $C_e(t_1)$, $C_e(t_2)$ et hydrauliques $C_h^{cons}(t_1)$, $C_h^{cons}(t_2)$, mesurées à ces mêmes instants $t_1$, $t_2$, puis, au cours d'une étape 23, on calcule une variation d'accélération $\Delta\gamma$, une variation de consigne hydraulique $\Delta C_h^{cons}$, et une variation de consigne électrique $\Delta C_e$.

On suppose que la consigne de freinage électrique est égale au couple de freinage électrique réellement appliqué, c'est-à-dire que l'on suppose que l'actionneur électrique a une efficacité de 1.

En appliquant le principe fondamental de la dynamique aux instants t1 et t2 précisés, la variation d'accélération $\Delta\gamma$ peut être exprimée en fonction de la variation du couple de freinage par friction $\Delta C_h$ et de la variation du couple électrique moteur $\Delta C_e$, et de paramètres physiques dimensionnels et dynamiques extérieurs au véhicule. En outre, on suppose les instants t1 et t2 suffisamment proches pour que les variations des forces appliquées au véhicule soient négligeables.

L'efficacité E de l'actionneur hydraulique peut alors être exprimée suivant la formule : $E = \dfrac{RM\Delta\gamma - \Delta C_e}{\Delta C_h^{cons}}$, où R représente le rayon des roues et M la masse du véhicule.

Les instants t1 et t2 étant relativement proches, il serait relativement délicat de calculer directement cette valeur d'efficacité à partir des variations mesurées.

On mettra en œuvre une méthode statistique. Ainsi, pour chaque estimation exécutée chacune pour un couple d'instants successifs t1 et t2, la méthode d'estimation et/ou d'actualisation consiste avantageusement à calculer successivement la valeur estimée d'efficacité de freinage E(k) selon les relations :

$$E[k] = E[k-1] + L[k](y[k] - \Phi[k]E[k-1])$$

$$L[k] = P[k-1]^* \ \Phi[k]/(\lambda+ \Phi[k]^*P[k-1] \ \Phi[k])$$

$$P[k] = (1-L[k]^* \ \Phi[k])^*P[k-1]/\lambda.$$

Dans cette relation, E[k] et E[k-1] désignent la valeur estimée et/ou actualisée de l'efficacité de freinage aux instants d'estimation de rang actuel k et antérieur k-1 ;

$y(k) = RM\Delta\gamma\text{-}\Delta C_e$ désigne, la valeur du produit $\Delta C_h^{cons} *E(k)$ aux instants d'estimation et/ou d'actualisation de rang k;

$\Phi[k] = \Delta C_h^{cons}$ désigne la valeur mesurée et calculée de la variation de consigne de couple hydraulique de freinage exercé par le système de freinage à friction aux instants d'estimation et/ou d'actualisation de rang k ;

P[k-1] désigne la covariance de l'efficacité de freinage E aux instants d'estimation de rang antérieur k-1;

L[k] est une fonction spécifique de la covariance P[k-1] de l'efficacité de freinage de rang antérieur k-1 ;

À désigne un facteur d'oubli.

La méthode des moindres carrés récursifs à facteur d'oubli variable apparaît remarquable en ce que cette dernière est simple de mise en œuvre, ne demande pas de moyens de calculs sophistiqués et ne nécessite pas le stockage de beaucoup de valeurs en mémoire, dans la mesure où les opérations sont effectuées pour les valeurs successives de rang antérieur k-1 et actuel k.

L'initialisation de l'ensemble et en particulier de l'algorithme de calcul des moindres carrés récursifs se limite en outre au choix de trois paramètres :

- la valeur E(0) de l'efficacité de freinage à l'instant d'initialisation t= 0, soit pour k = 0 ;
- la valeur du facteur d'oubli À;
- la valeur de la covariance initiale P(0).

Lors de l'estimation d'une valeur d'efficacité de freinage, la valeur estimée est de préférence filtrée au moyen d'un filtre passe-bas de type "Rate Limiter". Une fréquence de coupure correspondant à des temps de l'ordre de la minute peut permettre d'éviter les à-coups.

En complément, on peut prévoir un filtrage avec une fréquence de coupure correspondant à des temps de l'ordre de la semaine : en cas d'augmentation du signal filtré au-delà d'un seuil, un signal peut être émis afin d'attirer l'attention de l'utilisateur, car cette hausse peut être due à une usure des plaquettes notamment.

La solution d'estimation proposée permet une convergence rapide vers une valeur stable de l'efficacité de freinage. Si l'on souhaite simplement détecter les variations de l'efficacité dues à l'usure des plaquettes ou à la variation saisonnière de la température, le choix de la rampe, pente donnée par la covariance P(k-1), dépend essentiellement de la dynamique des variations que l'on souhaite estimer. Si au contraire on souhaite adapter l'efficacité de freinage aux conditions de température, une constante de temps ou pente de quelques minutes est choisie.

Cette estimation est représentée par l'étape 24 sur la figure 2.

Puis au cours d'une étape 25 on détermine une valeur d'un coefficient d'efficacité en divisant la valeur d'efficacité obtenue à l'étape 24 par une valeur d'efficacité supposée Eo, cette valeur Eo étant prédéterminée.

Au cours d'une étape 26, on stocke dans une mémoire la valeur du coefficient d'efficacité α(k), à un emplacement mémoire correspondant à la plage de vitesses correspondant à la valeur de vitesse reçue à l'étape 20.

Ce procédé peut ainsi permettre d'obtenir un ensemble de valeurs de coefficients d'efficacité, chaque valeur correspondant à une plage de vitesses.

La figure 3 montre un exemple d'ensemble obtenu, chaque croix représentant une valeur estimée par une méthode des moindres carrés du coefficient d'efficacité.

On peut à partir de cet ensemble de valeurs, procéder à une interpolation, ou lissage, ce qui peut permettre d'obtenir une courbe continue. Ainsi, on peut associer à chaque valeur de vitesse une valeur de coefficient d'efficacité.

Le procédé de la figure 2 peut être réitéré régulièrement afin d'actualiser les différentes valeurs de coefficient d'efficacité. L'efficacité de freinage peut effectivement varier sur des temps de l'ordre de quelques minutes, du fait d'une évolution de paramètres internes au système de freinage lié par exemple à la montée en température.

L'invention n'est bien entendu pas limitée à des plages de vitesse de 5 km/h. On pourra par exemple prévoir des intervalles plus étroits, par exemple de 1 km/ ou plus larges, par exemple de 10 km/h.

Les valeurs de coefficient d'efficacité sont réactualisées en permanence.

Le procédé décrit ci-dessus peut permettre d'obtenir un gain en terme de distance de freinage sur des essais de freinage successifs.

Le procédé décrit ci-dessus peut permettre d'obtenir des valeurs stabilisées pour le coefficient d'efficacité relativement rapidement.

Le procédé décrit ci-dessus peut permettre en outre d'améliorer le confort utilisateur, notamment lorsque le système de répartition fait passer le freinage du tout électrique au tout hydraulique.

## Revendications

1. Procédé de contrôle du freinage pour un véhicule équipé d'un moyen de freinage régénératif et d'un moyen de freinage complémentaire,

   le procédé comprenant:
   estimer une valeur de coefficient d'efficacité du moyen de freinage complémentaire au cours du roulage du véhicule,
   stocker une pluralité de valeurs de coefficient d'efficacité du moyen de freinage complémentaire, chaque valeur stockée correspondant à une vitesse du véhicule ou à une plage de vitesses de ce véhicule,
   recevoir une valeur de vitesse courante (V) du véhicule, et
   corriger une valeur de consigne de freinage complémentaire

   $\left( C_h^{cons} \right)$ destinée au moyen de freinage complémentaire, en appliquant à ladite valeur de consigne une valeur de coefficient d'efficacité choisie parmi ladite pluralité de valeurs stockées et correspondant à la vitesse courante du véhicule.

2. Procédé selon la revendication 1, dans lequel, pour au moins une valeur de vitesse ou plage de vitesses, la valeur de coefficient d'efficacité correspondante est issue d'une estimation effectuée à partir de valeurs mesurées pendant le roulage du véhicule.

3. Procédé selon la revendication 2, comprenant
   prévoir un ensemble de plages de vitesses,
   pour chaque plage de vitesses dudit ensemble, stocker une valeur de coefficient d'efficacité estimée à partir de valeurs mesurées pendant le roulage du véhicule,
   obtenir les autres valeurs de la pluralité de valeurs du coefficient d'efficacité par interpolation à partir de l'ensemble des valeurs estimées.

4. Procédé selon l'une des revendications 1 à 3, dans lequel, pour au moins une valeur de vitesse ou plage de vitesses, la valeur de coefficient d'efficacité correspondante est obtenue à partir :

   - d'au moins une valeur de mesure d'accélération du véhicule (y(ti), $\gamma(t_2)$), ladite au moins une mesure étant effectuée pendant une transition de freinage au cours de laquelle le moyen de freinage régénératif et/ou le moyen de freinage complémentaire appliquent un effort de freinage au véhicule, et
   - pour chaque valeur d'accélération reçue, d'une valeur de couple appliquée par le moyen de freinage régénératif ($C_e(t_1)$, $C_e(t_2)$) et d'une valeur de consigne de freinage complémentaire destinée au moyen de freinage complémentaire $\left( C_h^{cons}(t_1), \ C_h^{cons}(t_2) \right)$ correspondant à l'instant ($t_1$, $t_2$) de mesure de la valeur d'accélération,

   dans lequel ledit instant correspond à une vitesse courante du véhicule égale à la valeur de vitesse ou se situant dans la plage de vitesses.

5. Procédé selon la revendication 4, comprenant, pour au moins une valeur du coefficient d'efficacité à estimer :

   recevoir (21) au moins une paire de deux valeurs de mesure d'accélération ($\gamma(t_1)$, $\gamma(t_2)$),
   calculer (23) au moins une valeur de variation de l'accélération ($\Delta\gamma$) à partir respectivement de cette au moins une paire de valeurs de mesure d'accélération,

   estimer (24, 25) ladite valeur du coefficient d'efficacité à partir de ladite au moins une variation d'accélération, d'au moins une variation de couple appliqué par le moyen de freinage régénératif ($\Delta C_e$) et d'au moins une variation de consigne de freinage complémentaire $(\Delta C_h^{cons})$.

6. Procédé selon l'une des revendications 2 à 5, dans lequel, pour au moins une valeur de vitesse ou plage de vitesses, la valeur de coefficient d'efficacité correspondante est estimée à partir en outre d'au moins une valeur de coefficient d'efficacité précédemment estimée et correspondant à ladite valeur de vitesse ou plage de vitesses.

7. Procédé selon la revendication 6, dans lequel au moins une valeur du coefficient d'efficacité est estimée en utilisant une méthode des moindres carrés récursifs, à facteur d'oubli variable.

8. Dispositif de contrôle (1) du freinage pour un véhicule équipé d'un moyen de freinage régénératif, et d'un moyen de freinage complémentaire, le dispositif comprenant
un moyen d'estimation en cours de roulage du véhicule d'une valeur de coefficient d'efficacité du moyen de freinage complémentaire,
une mémoire (2) pour stocker une pluralité de valeurs d'un coefficient d'efficacité, chaque valeur stockée correspondant à une vitesse ou à une plage de vitesses du véhicule,
des moyens de réception pour recevoir une valeur de vitesse courante (V) du véhicule, et
des moyens de traitement (3) pour corriger une valeur de consigne de freinage complémentaire destinée au moyen de freinage complémentaire, en appliquant une valeur du coefficient d'efficacité choisie parmi ladite pluralité de valeurs stockées dans la mémoire et correspondant à la valeur de vitesse courante du véhicule.

9. Système de commande de freinage comprenant un dispositif de répartition d'une commande de freinage globale entre le moyen de freinage régénératif le moyen de freinage complémentaire, ainsi qu'un dispositif de contrôle (1) selon la revendication 8.

10. Véhicule comprenant un moyen de freinage régénératif, un moyen de freinage complémentaire et un système de commande selon la revendication 9.

**Patentansprüche**

1. Verfahren zur Bremssteuerung für ein Fahrzeug, das mit einem regenerativen Bremsmittel und mit einem komplementären Bremsmittel ausgestattet ist, wobei das Verfahren umfasst:

Schätzen eines Wertes eines Effizienzkoeffizienten des komplementären Bremsmittels während der Fahrt des Fahrzeugs,
Speichern einer Vielzahl von Werten des Effizienzkoeffizienten des komplementären Bremsmittels, wobei jeder gespeicherte Wert einer Geschwindigkeit des Fahrzeugs oder einem Geschwindigkeitsbereich dieses Fahrzeugs entspricht,
Empfangen eines Wertes der aktuellen Geschwindigkeit (V) des Fahrzeugs, und

Korrigieren eines Sollwertes des komplementären Bremsens $(C_h^{cons})$, der für das komplementäre Bremsmittel bestimmt ist, durch Anwenden eines Wertes des Effizienzkoeffizienten, der aus der Vielzahl von gespeicherten Werten ausgewählt ist und der aktuellen Geschwindigkeit des Fahrzeugs entspricht, auf den Sollwert.

2. Verfahren nach Anspruch 1, wobei für wenigstens einen Geschwindigkeitswert oder Geschwindigkeitsbereich der entsprechende Wert des Effizienzkoeffizienten aus einer Schätzung hervorgeht, die anhand von während der Fahrt des Fahrzeugs gemessenen Werten vorgenommen wurde.

3. Verfahren nach Anspruch 2, welches umfasst:

Vorsehen einer Menge von Geschwindigkeitsbereichen,
für jeden Geschwindigkeitsbereich der Menge, Speichern eines Wertes des Effizienzkoeffizienten, der anhand von während der Fahrt des Fahrzeugs gemessenen Werten geschätzt wurde,
Gewinnen der anderen Werte der Vielzahl von Werten des Effizienzkoeffizienten durch Interpolation anhand der Menge der geschätzten Werte.

4. Verfahren nach einem der Ansprüche 1 bis 3, wobei für wenigstens einen Geschwindigkeitswert oder Geschwindigkeitsbereich der entsprechende Wert des Effizienzkoeffizienten gewonnen wird:

- aus wenigstens einem Messwert der Beschleunigung des Fahrzeug ($\gamma(t_1)$, $\gamma(t_2)$), wobei die wenigstens eine Messung während eines Bremsübergangs durchgeführt wird, bei dem das regenerative Bremsmittel und/oder das komplementäre Bremsmittel eine Bremskraft auf das Fahrzeug ausüben, und
- für jeden empfangenen Beschleunigungswert, aus einem Wert des von dem regenerativen Bremsmittel ausgeübten Moments ($C_e(t_1)$, $C_e(t_2)$) und aus einem für das komplementäre Bremsmittel bestimmten Sollwert des komplementären Bremsens $(C_h^{cons}(t_1), \ C_h^{cons}(t_2))$, die dem Zeitpunkt ($t_1$, $t_2$) der Messung des Beschleunigungswertes entsprechen,

wobei dieser Zeitpunkt einer aktuellen Geschwindigkeit des Fahrzeugs entspricht, die gleich dem Geschwindigkeitswert ist oder in dem Geschwindigkeitsbereich liegt.

5. Verfahren nach Anspruch 4, welches umfasst, für wenigstens einen zu schätzenden Wert des Effizienzkoeffizienten:

Empfangen (21) wenigstens eines Paares von zwei Messwerten der Beschleunigung ($\gamma(t_1)$, $\gamma(t_2)$),
Berechnen (23) wenigstens eines Wertes der Änderung der Beschleunigung ($\Delta\gamma$) aus jeweils diesem wenigstens einen Paar von Messwerten der Beschleunigung,
Schätzen (24, 25) des Wertes des Effizienzkoeffizienten anhand der wenigstens einen Beschleunigungsänderung, wenigstens einer Änderung des von dem regenerativen Bremsmittel ausgeübten Moments ($\Delta C_e$) und wenigstens einer Änderung des Sollwertes des komplementären Bremsens $(\Delta C_h^{cons})$.

6. Verfahren nach einem der Ansprüche 2 bis 5, wobei für wenigstens einen Geschwindigkeitswert oder Geschwindigkeitsbereich der entsprechende Wert des Effizienzkoeffizienten außerdem anhand wenigstens eines Wertes des Effizienzkoeffizienten geschätzt wird, der zuvor geschätzt wurde und dem Geschwindigkeitswert oder Geschwindigkeitsbereich entspricht.

7. Verfahren nach Anspruch 6, wobei wenigstens ein Wert des Effizienzkoeffizienten unter Anwendung einer Methode der rekursiven kleinsten Quadrate mit variablem Vergessensfaktor geschätzt wird.

8. Vorrichtung (1) zur Bremssteuerung für ein Fahrzeug, das mit einem regenerativen Bremsmittel und mit einem komplementären Bremsmittel ausgestattet ist, wobei die Vorrichtung umfasst:

ein Mittel zur Schätzung eines Wertes eines Effizienzkoeffizienten des komplementären Bremsmittels während der Fahrt des Fahrzeugs,
einen Speicher (2) zum Speichern einer Vielzahl von Werten eines Effizienzkoeffizienten, wobei jeder gespeicherte Wert einer Geschwindigkeit oder einem Geschwindigkeitsbereich des Fahrzeugs entspricht,
Empfangsmittel zum Empfangen eines Wertes der aktuellen Geschwindigkeit (V) des Fahrzeugs, und
Verarbeitungsmittel (3) zum Korrigieren eines Sollwertes des komplementären Bremsens, der für das komplementäre Bremsmittel bestimmt ist, durch Anwenden eines Wertes des Effizienzkoeffizienten, der aus der Vielzahl von im Speicher gespeicherten Werten ausgewählt ist und dem Wert der aktuellen Geschwindigkeit des Fahrzeugs entspricht.

9. Bremssteuerungssystem, welches eine Vorrichtung zur Aufteilung eines globalen Bremsbefehls zwischen dem regenerativen Bremsmittel und dem komplementären Bremsmittel sowie eine Steuerungsvorrichtung (1) nach Anspruch 8 umfasst.

10. Fahrzeug, welches ein regeneratives Bremsmittel, ein komplementäres Bremsmittel und ein Steuerungssystem nach Anspruch 9 umfasst.

**Claims**

1. Method for controlling the braking for a vehicle equipped with a regenerative braking means and with an additional braking means, the method comprising:

estimating an efficiency coefficient value of the additional braking means during the running of the vehicle, storing a plurality of efficiency coefficient values of the additional braking means, each stored value corresponding to a speed of the vehicle or to a speed range of this vehicle,

receiving a current speed value (V) of the vehicle, and correcting an additional braking setpoint value $\left(C_h^{cons}\right)$ intended for the additional braking means, by applying to said setpoint value an efficiency coefficient value chosen from among said plurality of stored values and corresponding to the current speed of the vehicle.

2. Method according to Claim 1, in which, for at least one speed or speed range value, the corresponding efficiency coefficient value is obtained from an estimation carried out on the basis of values measured during the running of the vehicle.

3. Method according to Claim 2, comprising providing a set of speed ranges,
for each speed range of said set, storing an efficiency coefficient value estimated on the basis of values measured during the running of the vehicle,
obtaining the other values of the plurality of efficiency coefficient values by interpolation on the basis of the set of estimated values.

4. Method according to one of Claims 1 to 3, in which, for at least one speed or speed range value, the corresponding efficiency coefficient value is obtained:

- from at least one acceleration measurement value of the vehicle ($\gamma(t_1)$, ($\gamma(t_2)$), said at least one measurement being carried out during a braking transition during which the regenerative braking means and/or the additional braking means apply a braking force to the vehicle, and
- for each acceleration value received, from a torque value applied by the regenerative braking means $(C_e(t_1), C_e(t_2))$ and from an additional braking setpoint value intended for the additional braking means

$$\left(C_h^{cons}(t_1), C_h^{cons}(t_2)\right)$$ corresponding to the time ($t_1$, $t_2$) of measurement of the acceleration value,

in which said time corresponds to a current speed of the vehicle equal to the speed value or situated in the speed range.

5. Method according to Claim 4, comprising, for at least one efficiency coefficient value to be estimated:

receiving (21) at least one pair of two acceleration measurement values ($\gamma(t_1), \gamma(t_2)$),
calculating (23) at least one variation value of the acceleration ($\Delta\gamma$) from respectively this at least one pair of acceleration measurement values,
estimating (24, 25) said efficiency coefficient value from said at least one acceleration variation, from at least one variation of torque applied by the regenerative braking means ($\Delta C_e$) and from at least one additional braking setpoint variation $\left(\Delta C_h^{cons}\right)$.

6. Method according to one of Claims 2 to 5, in which, for at least one speed or speed range value, the corresponding efficiency coefficient value is estimated from, in addition, at least one efficiency coefficient value previously estimated and corresponding to said speed or speed range value.

7. Method according to Claim 6, in which at least one efficiency coefficient value is estimated using a recursive least squares method with a variable forget factor.

8. Device (1) for controlling the braking for a vehicle equipped with a regenerative braking means and with an additional braking means, the device comprising:

a means of estimating, during the running of the vehicle, an efficiency coefficient value of the additional braking means,
a memory (2) for storing a plurality of efficiency coefficient values, each stored value corresponding to a speed or to a speed range of the vehicle,
receiving means for receiving a current speed value (V) of the vehicle, and
processing means (3) for correcting an additional braking setpoint value intended for the additional braking means, by applying an efficiency coefficient value chosen from among said plurality of values stored in the memory and corresponding to the current speed value of the vehicle.

9. Braking control system comprising a device for distributing an overall braking command between the regenerative braking means and the additional braking means, and a control device (1) according to Claim 8.

10. Vehicle comprising a regenerative braking means, an additional braking means and a control system according to Claim 9.

**Fig.1**

**Fig.3**

**Fig.2**

réception V — 20

réception $\gamma(t_1)$, $\gamma(t_2)$ — 21

réception $C_h^{Cons}(t_1)$, $C_h^{Cons}(t_2)$
$C_e(t_1)$, $C_e(t_2)$ — 22

$\Delta\gamma := \gamma(t_1) - \gamma(t_2)$
$\Delta C_h^{Cons} := C_h^{Cons}(t_1) - C_h^{Cons}(t_2)$
$\Delta C_e := C_e(t_1) - C_e(t_2)$ — 23

$E(k)$ — 24

$\alpha(k) := \dfrac{E(k)}{Eo}$ — 25

st $\alpha(k)$ — 26

**EP 3 027 460 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080129110 A
- FR 2983437
- EP 2460701 A
- DE 102011086367